# DEMANDE DE BREVET EUROPEEN

(11) **EP 0 761 567 A1**
(43) Date de publication de la demande: **12.03.1997**
(21) Numéro de dépôt: 96202347.9
(22) Date de dépôt: 23.08.1996
(51) Int. Cl.: B65D 90/50, B32B 27/08, B65D 90/04

(54) **Réservoir de stockage à double paroi**

(30) Priorité: 25.08.1995 BE 9500714
(71) Demandeur: ETERNIT N.V., 1880 Kapelle-op-den-Bos (BE)
(72) Inventeur: Van Nieuwenhuyse, Philippe, 6590 Momignies (BE)
(74) Mandataire: Bairiot-Delcoux, Mariette

(57) **Abrégé**

La présente invention a pour objet un réservoir (1) à double paroi pour le stockage de combustibles liquides, plus particulièrement pour le stockage d'essence. Ce réservoir comporte une paroi extérieure dure (2) et une paroi intérieure souple (6), et est pourvu d'un système de détection de fuite entre ces deux parois (2, 6). La paroi intérieure souple (6) est un sac fait d'un film multicouche comportant :
- une couche intérieure soudable en résines d'ionomère au zinc, en résines d'ionomère au sodium, en résines de terionomère, en copolymères de PET dans lesquels des noyaux d'ionomère sont disposés entre les chaînes, en PEbd ou en PEbdl,
- une couche intermédiaire métallique, et
- une couche extérieure en PEhd biorienté, en PET, en PET biorienté, en polyéthylène, en polypropylène.

## Description

La présente invention concerne un réservoir à double paroi approprié pour le stockage de combustibles liquides, plus précisément pour le stockage d'essence.

L'invention a pour origine le besoin de systèmes de détection de fuite dans le cas de réservoirs qui sont utilisés pour le stockage de combustibles liquides, en vue d'empêcher ou au moins de limiter à un minimum, en cas de fuites éventuelles, une pollution de l'environnement.

Pour le stockage de combustibles liquides, on utilise déjà depuis longtemps des réservoirs de stockage en acier à double paroi, pourvus d'un système de détection de fuite. Un réservoir de stockage en acier à double paroi de ce type, tel que décrit dans le brevet européen EP-B-0 229 070, est constitué de parois intérieure et extérieure cylindriques, en acier, agencées coaxialement l'une par rapport à l'autre et maintenues à une distance fixe l'une de l'autre par des organes d'entretoisement annulaires qui sont disposés entre les deux parois cylindriques. Dans le cas du brevet précité, le réservoir de stockage est placé dans le sol. L'espace entre les deux parois est rempli d'un liquide de détection de fuite (par exemple un mélange d'eau et de glycol) et est raccordé au moyen d'un tube à un instrument de lecture situé au-dessus du sol pour la détection de fuite. Le liquide de détection de fuite se trouve également dans le tube. Si une fuite apparaît dans la paroi extérieure ou intérieure du réservoir, le niveau du liquide de détection de fuite baissera. Dès qu'un niveau minimum prédéfini est atteint, une alarme (lumière ou son) est déclenchée.

Actuellement, on utilise cependant de plus en plus souvent pour le stockage d'essence des réservoirs à simple paroi faits de matière plastique renforcée de fibres de verre, et plus particulièrement de polyester renforcé de fibres de verre, avec de nombreux avantages par rapport aux réservoirs en acier. Tout d'abord, l'imperméabilité des réservoirs en matière plastique renforcée de fibres de verre à simple paroi offre la même garantie que celle des réservoirs en acier à double paroi, ils sont donc aussi fiables en ce qui concerne leur étanchéité aux fuites. En outre, ils ne rouillent pas et ont par conséquent une durée de vie beaucoup plus longue. Ils sont légers et faciles à placer ou à déplacer, présentent une résistance élevée à l'égard des produits chimiques, sont insensibles aux bactéries, aux influences galvaniques et aux courants vagabonds (une cause importante de corrosion dans le cas de réservoirs en acier souterrains qui sont placés à proximité de lignes de chemin de fer), et la protection cathodique est superflue. Le prix d'un réservoir en matière plastique renforcée de fibres de verre à simple paroi n'est pas supérieur à celui d'un réservoir de stockage en acier à double paroi. Enfin, un réservoir en matière plastique renforcée de fibres de verre offre des avantages dans le domaine de l'entretien grâce à sa paroi particulièrement lisse, sur laquelle se maintiennent rarement des substances étrangères.

L'inconvénient d'un réservoir en matière plastique renforcée de fibres de verre à simple paroi est qu'on ne peut pas effectuer une détection de fuite de la même manière que dans le cas de réservoirs en acier a double paroi. En effet, pour ce faire, on a besoin de deux parois, entre lesquelles on dispose un système de détection de fuite. Cependant, la réalisation d'un réservoir en matière plastique renforcée de fibres de verre à double paroi doublerait le prix de revient, d'où les réservoirs en matière plastique renforcée de fibres de verre à double paroi, malgré leurs nombreux avantages, sont actuellement peu concurrentiels en ce qui concerne leur prix par rapport aux réservoirs en acier à double paroi.

On connaît également des réservoirs comportant une paroi solide et un revêtement extérieur en polyéthylène haute densité (PEhd). Un exemple en est décrit dans le brevet européen EP-B-0 220 730. Dans celui-ci, le réservoir, destiné à contenir de l'essence ou d'autres matières pétrochimiques, est enveloppé, extérieurement, d'une couche de PEhd linéaire. Cette couche est soudée a elle-même afin de former ainsi une gaine qui se trouve autour du réservoir. Sur les extrémités sont disposées des coiffes de fermeture qui sont également faites de PEhd linéaire et qui présentent une forme appropriée pour recouvrir les extrémités du réservoir. Ces coiffes de fermeture sont soudées à la gaine après qu'un système de détection de fuite a été disposé entre la paroi de réservoir dure et l'enveloppe souple.

Le sac en PEhd décrit ci-dessus présente un certain nombre d'inconvénients. Le PEhd gonfle au contact de l'essence. Si une fuite apparaît pour une raison quelconque dans la paroi de réservoir intérieure (dure), l'enveloppe souple en PEhd viendra en contact avec l'essence, gonflera et perdra ainsi son imperméabilité, une pollution de l'environnement pouvant de ce fait se produire avant que le réservoir ne puisse être vidé.

En outre, le sac en PEhd décrit ci-dessus est disposé à l'extérieur. Lors de l'installation de réservoirs à double paroi de ce type, destinés à une capacité de 5000 a 50 000 litres, le risque que l'enveloppe souple extérieure soit endommagée, par exemple par les organes de préhension d'une grue ou par des objets acérés présents dans le sol, est réel.

La pose d'un sac extérieur de ce type dans le cas de réservoirs souterrains déjà existants est une tache complexe, conteuse et qui prend du temps. Pour ce faire, le réservoir doit en effet être déterré, et être enveloppé par la paroi souple. Le remplacement du sac extérieur après qu'une fuite a été détectée butte sur les mêmes difficultés.

Le sac en PEhd décrit ci-dessus n'est pas utilisable comme paroi intérieure dans un réservoir pour le stockage d'essence, vu que l'essence, comme mentionné ci-dessus, fait gonfler le PEhd, ce qui entraîne que le PEhd perd son imperméabilité à, entre autres, l'essence.

Un but de l'invention est de concevoir un réservoir à double paroi qui ne présente pas les inconvénients mentionnés ci-dessus. Plus particulièrement, un but est de concevoir un réservoir à double paroi qui soit approprié pour le stockage de combustibles liquides et, en particulier, d'essence, qui puisse être pourvu d'un système de détection de fuite et qui ne coure pas, lors de la mise en place, un plus grand risque d'endommagement qu'un réservoir à simple paroi.

La présente invention a pour objet un réservoir de stockage à double paroi approprié pour le stockage de combustibles liquides, et en particulier pour le stockage d'essence. Il comporte une paroi extérieure et une paroi intérieure, entre lesquelles se trouve un mat poreux, et est pourvu d'un système de détection et de signalisation de fuite qui décèle et signale les fuites dans la paroi intérieure. La paroi extérieure est une paroi dure, et la paroi intérieure est un sac souple fait d'un film multicouche comportant :
- une couche intérieure qui vient en contact avec le liquide stocké dans le réservoir et qui est faite d'une matière choisie parmi : des résines d'ionomère au zinc, des résines d'ionomère au sodium, des résines de terionomère, des copolymères de PET dans lesquels des noyaux d'ionomère sont disposés entre les chaînes, du PEbd, du PEbdl,
- une couche intermédiaire métallique, et
- une couche extérieure qui est faite d'une matière choisie parmi : du PEhd biorienté, du PET, du PET biorienté, du polypropylène, du polyéthylène.

Par les termes "paroi intérieure", on entend, dans le cadre de ce texte, la paroi du réservoir de stockage à double paroi qui entoure le liquide stocké (par exemple de l'essence), et qui vient ainsi en contact direct avec ce liquide. Par les termes "paroi extérieure", on entend dans le présent contexte une deuxième paroi, également imperméable au liquide à stocker, paroi qui se trouve à quelque distance de la paroi intérieure et enveloppe cette dernière. Suivant une forme de réalisation simple du réservoir de stockage à double paroi suivant l'invention, cette paroi extérieure forme la paroi externe du réservoir de stockage. Il est cependant également possible que la paroi indiquée par les termes "paroi extérieure" soit à son tour également entourée d'une ou de plusieurs parois imperméables au liquide à stocker. Ainsi, dans des circonstances dans lesquelles il existe un risque accru d'endommagement du réservoir de stockage, le réservoir de stockage à double paroi suivant l'invention peut être un réservoir de stockage à triple paroi, dans lequel la paroi extérieure est à son tour entourée d'une paroi imperméable dure.

Suivant une forme de réalisation préférée, la couche intérieure du sac souple est faite de résines d'ionomère au sodium.

La couche intermédiaire métallique du sac souple peut être faite de différents métaux, en particulier d'aluminium, d'étain ou d'or, avec une préférence pour l'aluminium. Cette couche intermédiaire métallique présente de préférence une épaisseur comprise entre 8 et 15 µm, ou mieux entre 8 et 10 µm.

La couche intérieure peut être unie à la couche intermédiaire métallique sous l'action de la chaleur. Ces deux couches peuvent cependant également être unies l'une à l'autre au moyen d'une couche de colle.

Il en va de même pour l'union de la couche intermédiaire métallique à la couche extérieure : elle peut être réalisée sous l'influence de la chaleur ou au moyen d'une couche de colle.

La couche intermédiaire métallique peut être une couche d'aluminium qui est métallisée sur la couche intérieure ou sur la couche extérieure.

Bien que la paroi extérieure du réservoir puisse être constituée d'acier, la préférence va a une paroi extérieure qui est constituée de matière plastique renforcée de fibres de verre, telle que du polyester renforcé de fibres de verre.

Si l'on utilise un système de détection et de signalisation de fuite qui ne détecte que la présence du liquide stocké, par exemple de l'essence, entre la paroi intérieure et la paroi extérieure, seules seront décelées de cette manière les fuites dans la paroi intérieure. Vu la fiabilité élevée des réservoirs en matière plastique renforcée de fibres de verre en ce qui concerne leur étanchéité aux fuites, cela peut suffire en particulier pour certaines applications dans le cas des réservoirs en matière plastique renforcée de fibres de verre. De préférence, on utilise cependant un système de détection et de signalisation de fuite qui décèle et signale tant les fuites dans la paroi intérieure que les fuites dans la paroi extérieure.

Dans ce dernier cas, le système de détection et de signalisation de fuite peut comporter une installation de mesure qui d'une part crée, entre la paroi intérieure et la paroi extérieure, une dépression d'une valeur de consigne préréglée, et d'autre part mesure la pression réelle entre ces deux parois, le système de détection et de signalisation de fuite émettant un signal lorsque la pression réelle et la valeur de consigne présentent systématiquement une discordance.

L'invention concerne également un dispositif destiné à diminuer le risque de fuite d'un réservoir de stockage à paroi dure, approprié pour le stockage de combustibles liquides et en particulier pour le stockage d'essence, et à limiter les conséquences de fuites éventuelles. Le dispositif suivant l'invention comporte un mat poreux, un système de détection et de signalisation de fuite et un sac souple qui forme la paroi intérieure du réservoir et qui correspond au sac souple décrit ci-dessus à propos du réservoir de stockage à double paroi. Le mat poreux se trouve entre la paroi intérieure souple et la paroi dure du réservoir de stockage et agit ainsi comme organe d'entretoisement entre les deux parois. Le système de détection et de signalisation de fuite du dispositif suivant l'invention détecte et signale les fuites éventuelles dans la paroi intérieure.

Le dispositif suivant l'invention est particulièrement approprié pour un réservoir de stockage dont la paroi dure est constituée de matière plastique renforcée de fibres de verre. Il est cependant également utile pour un réservoir de stockage dont la paroi dure est une paroi en acier. Il est surtout avantageux dans le cas de réservoirs de stockage dont la paroi dure est une simple paroi, bien qu'il soit également approprié pour un réservoir de stockage dont la paroi dure est une double paroi.

Suivant une forme de réalisation préférable du dispositif suivant l'invention, les fuites dans la paroi dure sont également décelées et signalées par le système de détection et de signalisation de fuite.

Dans ce cas, le système de détection et de signalisation de fuite comporte par exemple une installation de mesure qui d'une part crée, entre la paroi intérieure et la paroi dure, une dépression d'une valeur de consigne préréglée et d'autre part mesure la pression réelle entre ces deux parois, le système de détection et de signalisation de fuite émettant un signal lorsque la pression réelle entre ces parois et la valeur de consigne présentent systématiquement une discordance.

L'invention a également pour objet une paroi intérieure pour un réservoir de stockage à paroi extérieure dure, approprié pour le stockage de combustibles liquides, et en particulier d'essence. Cette paroi intérieure correspond au sac souple tel que décrit ci-dessus a propos du réservoir de stockage à double paroi suivant l'invention.

L'invention décrite plus en détail ci-après a en outre pour objet un sac souple qui peut être utilisé comme paroi intérieure souple dans un réservoir de stockage comportant une paroi dure, approprié pour le stockage de combustibles liquides, et particulièrement d'essence. Ce sac souple correspond au sac souple tel que décrit ci-dessus à propos du réservoir de stockage à double paroi suivant l'invention.

La présente invention a plusieurs avantages. Elle permet d'une manière rapide, simple et efficace, de pourvoir un réservoir d'une paroi intérieure imperméable a l'essence, ce qui permet également de procéder à une détection de fuite entre la paroi intérieure souple et la paroi extérieure du réservoir. En outre, il n'est pas nécessaire de concevoir pour l'invention un nouveau type de réservoir rigide de modèle adapté, puisque l'invention peut aussi être appliquée à des réservoirs déjà existants. Un avantage supplémentaire de l'invention est que la paroi intérieure souple est simple à installer et à enlever, de sorte que la paroi intérieure peut être rapidement et simplement remplacée, par exemple pour éviter une contamination du combustible à stocker par des résidus de liquides précédemment stockés dans le réservoir. Un avantage important de l'invention est que le remplacement de la paroi intérieure souple peut avoir lieu in situ, sans que le réservoir ne doive pour ce faire être relevé.

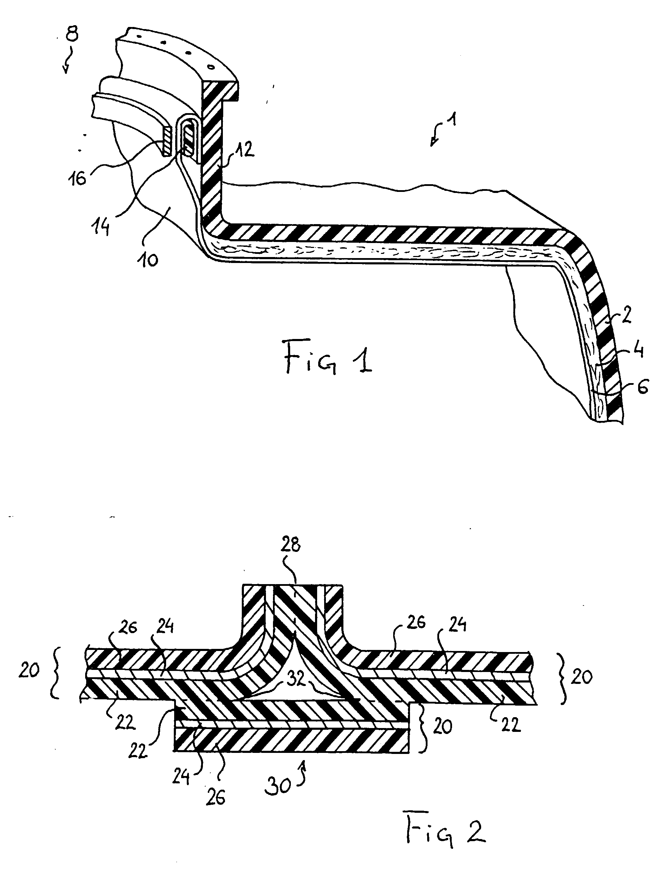

Dans ce qui suit, l'invention sera décrite plus en détail sur la base des formes de réalisation spécifiques et sur la base des Fig. 1 et 2.

La Fig. 1 est une représentation de détail partielle, en partie en perspective et en partie en coupe transversale, d'un réservoir de stockage suivant l'invention au niveau du trou d'homme, tandis que la Fig. 2 représente une coupe transversale d'un joint soudé renforcé du sac interne. Sur ces figures, pour obtenir une représentation claire, les parties constituantes n'ont pas été représentées selon leurs rapports de dimensions réels, mais les rapports dimensionnels ont, au contraire, été adaptés.

Le réservoir de stockage 1 représenté à la Fig. 1 est un réservoir de stockage d'essence comportant une paroi extérieure dure en polyester renforcé de fibres de verre.

Le côté intérieur de la paroi extérieure dure 2 du réservoir de stockage 1 est revêtue d'un mat poreux 4, constitué d'une ou de plusieurs parties, d'une épaisseur de 1 à 3 mm, par exemple un mat poreux non tissé fait de fibres en polyester. Ce mat poreux 4, qui est perméable dans toutes les directions aux gaz et aux liquides, agit comme organe d'entretoisement entre la paroi extérieure dure 2 et la paroi intérieure souple 6. Ceci permet une détection efficace des fuites locales éventuelles, dans la paroi intérieure 6 ou la paroi extérieure 2, qui se produiraient à une certaine distance de l'appareil de détection.

Un sac souple, fait à partir de l'un des films multicouches définis ci-dessus, est introduit sous forme pliée ou enroulée via le trou d'homme 8 dans l'intérieur du réservoir de stockage 1, après quoi le sac est déployé, par exemple à l'aide d'air comprimé, à l'intérieur du réservoir de stockage 1, de sorte qu'il se trouve contre le mat poreux 4 et forme ainsi dans le réservoir de stockage 1 une paroi intérieure souple 6.

Pour éviter que la paroi intérieure souple 6, et plus particulièrement les joints soudés de celle-ci, ne soit mise sous contrainte par le liquide présent dans le réservoir de stockage 1, le sac souple est conçu de telle manière que ses dimensions dans toutes les directions soient quelque peu supérieures aux dimensions correspondantes de l'espace intérieur libre du réservoir de stockage 1 revêtu du mat poreux 4.

L'accès à l'intérieur de la paroi intérieure souple 6 est possible via le trou d'homme 8. La paroi intérieure souple 6 y est fixée de manière connue à la paroi extérieure dure 2. Un mode de fixation typique est décrit ci-après. Au niveau du trou d'homme 8, la paroi intérieure souple 6 présente un manchon 10 dont la section transversale correspond en dimension et en forme essentiellement à la section transversale interne du trou d'homme 8. Entre le manchon 10 et la paroi verticale 12 du trou d'homme 8 se trouve un anneau en matière plastique souple 14. Sur le côté intérieur de la paroi verticale 12 du trou d'homme 8, le manchon 10 est pressé contre l'anneau souple 14 par un anneau tendeur 16, qui résiste aux matières à stocker, de telle sorte que cet anneau souple 14 forme un anneau d'étanchéité entre la paroi intérieure souple 6 et la paroi verticale 12 du trou d'homme 8. Au cas où la matière de l'anneau souple 14 n'est pas résistante ou n'est pas assez résistante aux matières à stocker, le manchon 10 peut être replié par dessus l'anneau souple 14, de sorte que, lors de la tension de l'anneau tendeur 16, le film multicouche dont est constituée la paroi intérieure souple 6 se trouve entre l'anneau tendeur 16 et l'anneau souple 14 d'une part et entre l'anneau souple 14 et la paroi verticale 12 du trou d'homme 8 d'autre part. Ceci est illustré sur la Fig. 1. De cette façon, également lors du remplissage ou de la vidange du réservoir de stockage 1, l'anneau souple 14 ne vient pas en contact avec le liquide stocké. Un mode de fixation analogue est également approprié pour d'éventuelles conduites d'amenée ou d'évacuation.

Le montage du sac souple dans le réservoir de stockage 1 peut donc être effectué rapidement et efficacement, à l'aide de moyens courants et simples sans que beaucoup de main-d'oeuvre ou une connaissance technique particulière ne soient requises pour ce faire.

Le film multicouche 20 à partir duquel est faite la paroi intérieure souple 6 d'un réservoir de stockage 1 à double paroi suivant l'invention comporte une couche intérieure 22 qui vient en contact avec le liquide stocké, dans ce cas de l'essence, une couche intermédiaire 24 et une couche extérieure 26.

Un premier exemple de la matière à partir de laquelle est formée la couche intérieure 22 est fourni par les résines d'ionomère. Celles-ci sont commercialisées entre autres déjà depuis 1964 par Du Pont sous la marque déposée SURLYN®.

Trois groupes principaux font partie de la gamme de produits SURLYN® : des résines d'ionomère au zinc, des résines d'ionomère au sodium et des résines de terionomère. Un certain nombre de types de produits chimiques, tels que les hydrocarbures aliphatiques, les hydrocarbures chlorés, les composés aromatiques et les composés hétérocycliques (donc également certains constituants de l'essence) sont absorbés par les résines d'ionomère de façon plus ou moins importante, et ceci en fonction du type d'ionomère utilisé. Cette absorption provoque un gonflement et un affaiblissement d'une couche de résine d'ionomère, et une augmentation de son poids. L'expérience a montré que les résines d'ionomère au sodium absorbent ces solvants dans une moindre mesure, et sont par conséquent plus appropriées que les résines d'ionomère au zinc comme couche intérieure 22 d'une paroi intérieure souple 6 pour utilisation dans des réservoirs 1 pour le stockage d'essence.

Un deuxième exemple de la matière à partir de laquelle peut être faite la couche intérieure 22 de la paroi intérieure souple 6 est un copolymère de PET d'une viscosité à l'état fondu élevée, dans lequel des noyaux d'ionomère sont présents entre les chaînes polymériques. Un exemple approprié pour l'invention d'un copolymère de PET de ce type est commercialisé par Du Pont dans la série 8000 de la marque SELAR PT®.

Un troisième exemple de la matière à partir de laquelle peut être faite la couche intérieure 22 de la paroi intérieure souple 6 est du PEbd (polyéthylène basse densité) ou du PEbdl (polyéthylène basse densité linéaire).

De préférence, la couche intérieure 22 présente une épaisseur de 110 µm maximum.

La couche intermédiaire 24 est formée d'un métal, de préférence d'aluminium. Elle a de préférence une épaisseur de 8 à 15 µm, ou mieux de 8 à 10 µm.

Un premier exemple de la matière à partir de laquelle est faite la couche extérieure 26 de la paroi intérieure souple 6 est du PEhd biorienté, tel que du VALÉRON®, commercialisé par Van Leer Flexibles. La pellicule VALÉRON® est un stratifié croisé formé de deux pellicules mono-orientées. Les deux pellicules sont unies l'une à l'autre d'une manière telle que les axes des orientations préférées se croisent l'un l'autre sous un angle de 90°. Ce stratifié croisé présente des propriétés mécaniques exceptionnellement bonnes.

Un deuxième exemple de la matière à partir de laquelle peut être faite la couche extérieure 26 de la paroi intérieure souple 6 est du PET non orienté, tel que du HYTREL® qui est commercialisé par Du Pont.

Un troisième exemple de la matière à partir de laquelle peut être faite la couche extérieure 26 de la paroi intérieure souple 6 est du PET biorienté.

D'autres matières plastiques, comme par exemple du polypropylène ou du polyéthylène, peuvent également être utilisées pour la couche extérieure 26, pour autant qu'elles soient suffisamment souples et qu'elles confèrent une résistance mécanique suffisante au film multicouche 20 dont est constituée la paroi intérieure souple 6. En pratique, surtout les coûts de matière sont le facteur déterminant dans le choix de la matière pour la couche extérieure 26.

La couche extérieure 26 présente de préférence une épaisseur de 75 µm maximum.

De préférence, les couches constituantes 22, 24, 26 du film multicouche 20 sont liées les unes aux autres sous l'action de la chaleur. Il peut cependant également être souhaitable d'appliquer entre les différentes couches 22, 24, 26 dont est constitué le film multicouche 20 une couche de colle en vue de lier ces couches 22, 24, 26 les unes aux autres. Dans ce cas, le choix de la colle est important, surtout en ce qui concerne la colle entre la couche intérieure 22 et la couche intermédiaire 24. Celle-ci doit en effet résister au combustible stocké. Comme colle, on utilise suivant des techniques connues des colles fusibles dites "hot melt" comme par exemple du PEbd présentant un bas point de fusion.

Un exemple d'un film à trois couches 20 approprié pour la paroi intérieure souple 6 suivant l'invention peut être trouvé dans le commerce sous l'appellation de VAS® - Laminaat (ci-après désigné par stratifié VAS®), un produit de Van Leer Flexibles. Ce stratifié VAS® est constitué d'une couche extérieure en pellicule VALÉRON® d'une épaisseur de 75 µm, d'une couche intermédiaire en aluminium d'une épaisseur de 12 µm et d'une couche intérieure en un revêtement comme par exemple du SURLYN® qui est soudable sous l'influence de la chaleur.

Ce film à trois couches 20 n'est de préférence pas plus épais que 0,2 mm.

En général, la limitation de l'épaisseur du film multicouche 20 est imposée par le fait que le sac souple, qui forme la paroi intérieure 6 à l'intérieur du réservoir de stockage 1, doit pouvoir être plié ou enroulé sans détérioration en vue de permettre son introduction via un trou d'homme 8 (diamètre de 500 à 600 mm) dans le réservoir de stockage 1.

Constitué d'un film multicouche 20 d'une épaisseur de 200 µm, et de la masse usuelle pour des films de ce type d'environ 213 g/m², un sac souple approprié pour un réservoir de stockage de 10 000 litres pèse entre 7 et 8 kg. Un sac souple qui est approprié pour un réservoir de stockage de 50 000 litres pèse alors 22 à 23 kg. De tels sacs souples sont par conséquent, en ce qui concerne leur poids, encore facilement manipulables.

De préférence, le film multicouche 20 ne comporte que ces trois couches (couche intérieure 22, couche intermédiaire 24 et couche extérieure 26). Il peut cependant être également constitué de plus de couches que ces trois couches 22, 24, 26. Dans ce cas, il faut veiller à ce que le film multicouche 20 satisfasse néanmoins dans son ensemble à toutes les propriétés mécaniques et chimiques requises pour l'invention, telles que, entre autres, la souplesse, l'imperméabilité aux combustibles liquides et en particulier à l'essence, la soudabilité de la couche qui vient en contact avec le combustible stocké et la résistance chimique de cette dernière par rapport à des combustibles liquides tels que l'essence.

Un sac souple de la forme et des dimensions correctes peut être obtenu par le soudage thermique les unes aux autres de pièces du film multicouche 20 décrit ci-dessus, de forme adéquate, via leurs couches intérieures 22 respectives. Afin de limiter davantage le risque de fuite dans les joints soudés 28 ainsi obtenus, ces joints soudés 28 sont de préférence protégés sur le côté intérieur du sac souple au moyen d'une bande 30. Cette bande 30 qui est également constituée d'un film multicouche 20 identique ou analogue, est appliquée, dans le sens de sa longueur, au-dessus du joint soudé 28, de telle sorte que la bande 30 chevauche le joint soudé 28 et que le côté de la bande 30 indiqué par les termes "couche intérieure 22" soit tourné vers le joint soudé 28. La bande 30 est, de part et d'autre du joint soudé 28, soudée thermiquement de manière ininterrompue au côté intérieur du sac souple par des joints soudés continus 32. Il va de soi que, en vue de l'étanchéité aux fuites de la paroi intérieure souple 6, le soudage thermique doit être réalisé avec le soin nécessaire.

Il existe une proposition de norme CEN européenne (prEN976), qui détermine un produit type à l'égard duquel tout réservoir qui est mis sur le marché, et qui est destiné au stockage de combustibles liquides, doit être résistant. Dans le cas de réservoirs destinés au stockage d'essence, ce produit type est un mélange de 41,5% en volume de toluène, 41,5% en volume d'iso-octane, 15% en volume de méthanol et 2% en volume d'isobutanol, ce qui est une simulation des combustibles liquides les plus agressifs qui sont sur le marché.

L'expérience a montré qu'un sac souple en stratifié VAS®, dont des parties sont soudées thermiquement les unes aux autres avec soin de la manière décrite ci-dessus par l'intermédiaire de la couche intérieure SURLYN® du stratifié, peut contenir pendant 1 an le produit type pour l'essence décrit ci-dessus sans qu'un sac de ce type ne présente de fuite.

Pour la détection de fuite, une dépression d'une valeur de consigne préréglée est par exemple créée, après l'introduction du sac souple, entre la paroi intérieure souple 6 ainsi obtenue et la paroi extérieure dure 2 du réservoir de stockage 1 au moyen d'une pompe à vide. Cette valeur vaut de préférence environ 300 mbars. La pression entre la paroi extérieure dure 2 et la paroi intérieure souple 6 est mesurée via un manomètre. Dans des conditions normales, la pression mesurée est la même que la valeur de consigne. Si les deux valeurs diffèrent l'une de l'autre, la pompe à vide est mise en oeuvre en vue d'atteindre a nouveau la valeur de consigne de la dépression entre les deux parois 2, 6. Lorsqu'aucune des deux parois 2, 6 ne fuit, la pompe à vide ne devra que rarement être à nouveau enclenchée. Cependant, si une des deux parois 2, 6 fuit, la pompe à vide doit alors être enclenchée plus souvent et une alarme est déclenchée.

Suivant une forme de réalisation préférée du système de détection et de signalisation de fuite décrit ci-dessus, un tube incompressible perforé est disposé au-dessus et en dessous, entre la paroi extérieure dure 2 du réservoir de stockage 1 et le mat poreux 4. Le tube perforé qui se trouve en dessous est raccordé à la pompe à vide. Le tube perforé qui se trouve au-dessus est raccordé au manomètre. Le nombre, l'emplacement et la dimension des perforations peuvent varier, mais ils doivent cependant être choisis de telle manière qu'un mauvais fonctionnement du système de détection dû à l'obstruction d'un ou des deux tubes soit évité.

Un avantage supplémentaire d'un système de détection et de signalisation de fuite qui crée une dépression entre la paroi intérieure souple 6 et la paroi extérieure dure 2 est que, même lorsque le réservoir de stockage 1 est vide, la dépression entre les deux parois 2, 6 maintient la paroi intérieure souple 6 pressée contre le mat poreux 4. Au cas où le système de détection et de signalisation de fuite ne crée pas de dépression entre les deux parois 2, 6, il peut parfois être souhaitable de pourvoir le réservoir de stockage 1 de moyens qui maintiennent la paroi intérieure souple 6 dans sa forme et sa position souhaitées. Ainsi, par exemple, on peut disposer, à l'intérieur du sac interne qui forme la paroi intérieure souple 6, des cerceaux résistants à la matière à stocker, qui poussent localement la paroi intérieure souple 6 contre le mat poreux 4.

## Revendications

1. Réservoir de stockage à double paroi (1), approprié pour le stockage de combustibles liquides, et en particulier d'essence, comportant une paroi extérieure (2) et une paroi intérieure (6), entre lesquelles se trouve un mat poreux (4), et pourvu d'un système de détection et de signalisation de fuite qui décèle et signale les fuites dans la paroi intérieure (6), le réservoir de stockage à double paroi (1) étant caractérisé en ce que la paroi extérieure (2) est une paroi dure, et que la paroi intérieure (6) est un sac souple fait d'un film multicouche (20) comportant :
- une couche intérieure (22) qui est faite d'une matière choisie parmi : des résines d'ionomère au zinc, des résines d'ionomère au sodium, des résines de terionomère, des copolymères de PET dans lesquels des noyaux d'ionomère sont disposés entre les chaînes, du PEbd, du PEbdl,
- une couche intermédiaire métallique (24), et
- une couche extérieure (26) qui est faite d'une matière choisie parmi : du PEhd biorienté, du PET, du PET biorienté, du polypropylène, du polyéthylène.

2. Réservoir de stockage à double paroi (1) suivant la revendication 1, caractérisé en ce que la couche intérieure (22) du sac souple est faite de résines d'ionomère au sodium.

3. Réservoir de stockage à double paroi (1) suivant l'une quelconque des revendications précédentes, caractérisé en ce que la couche intermédiaire (24) du sac souple est faite d'un métal choisi parmi : l'aluminium, l'étain, l'or.

4. Réservoir de stockage à double paroi (1) suivant l'une quelconque des revendications précédentes, caractérisé en ce que la couche intermédiaire (24) du sac souple est faite d'aluminium.

5. réservoir de stockage à double paroi (1) suivant l'une quelconque des revendications précédentes, caractérisé en ce que la couche intermédiaire métallique (24) du sac souple présente une épaisseur comprise entre 8 et 15 µm.

6. Réservoir de stockage à double paroi (1) suivant la revendication 5, caractérisé en ce que la couche intermédiaire métallique (24) du sac souple présente une épaisseur comprise entre 8 et 10 µm.

7. Réservoir de stockage à double paroi (1) suivant l'une quelconque des revendications précédentes, caractérisé en ce que la couche intérieure (22) est unie à la couche intermédiaire métallique (24) sous l'action de la chaleur.

8. Réservoir de stockage à double paroi (1) suivant l'une quelconque des revendications 1 à 6, caractérisé en ce que la couche intérieure (22) est unie à la couche intermédiaire métallique (24) au moyen d'une couche de colle.

9. Réservoir de stockage à double paroi (1) suivant l'une quelconque des revendications précédentes, caractérisé en ce que la couche intermédiaire métallique (24) est unie à la couche extérieure (26) sous l'action de la chaleur.

10. Réservoir de stockage à double paroi (1) suivant l'une quelconque des revendications 1 à 8, caractérisé en ce que la couche intermédiaire métallique (24) est unie à la couche extérieure (26) au moyen d'une couche de colle.

11. Réservoir de stockage à double paroi (1) suivant l'une quelconque des revendications précédentes, caractérisé en ce que la couche intermédiaire (24) est une couche d'aluminium qui est métallisée sur la couche intérieure (22).

12. Réservoir de stockage à double paroi (1) suivant l'une quelconque des revendications précédentes, caractérisé en ce que la couche intermédiaire (24) est une couche d'aluminium qui est métallisée sur la couche extérieure (26).

13. Réservoir de stockage à double paroi (1) suivant l'une quelconque des revendications précédentes, caractérisé en ce que la paroi extérieure (2) est constituée de matière plastique renforcée de fibres de verre.

14. Réservoir de stockage à double paroi (1) suivant l'une quelconque des revendications précédentes, caractérisé en ce que le système de détection et de signalisation de fuite décèle et signale également les fuites dans la paroi extérieure (2).

15. Réservoir de stockage à double paroi (1) suivant la revendication 14, caractérisé en ce que le système de détection et de signalisation de fuite comporte une installation de mesure qui d'une part crée, entre la paroi intérieure (6) et la paroi extérieure (2), une dépression d'une valeur de consigne préréglée et d'autre part mesure la pression réelle entre ces deux parois (6, 2) et émet un signal lorsque la pression réelle entre ces deux parois (6, 2) et la valeur de consigne présentent systématiquement une discordance.

16. Dispositif destiné à diminuer le risque de fuite d'un réservoir de stockage à paroi dure (2), approprié pour le stockage de combustibles liquides et en particulier pour le stockage d'essence, et à limiter les conséquences de fuites éventuelles, comportant un mat poreux (4), un système de détection et de signalisation de fuite et un sac souple, caractérisé en ce que
- le sac souple forme la paroi intérieure (6) du réservoir de stockage (1) et correspond au sac souple décrit dans l'une quelconque des revendications 1 à 15,
- le mat poreux (4) se trouve entre la paroi intérieure souple (6) et la paroi dure (2) du réservoir de stockage (1), et
- le système de détection et de signalisation de fuite détecte et signale les fuites dans la paroi intérieure (6).

17. Dispositif suivant la revendication 16, caractérisé en ce que le système de détection et de signalisation de fuite décèle et signale également les fuites dans la paroi dure (2).

18. Dispositif suivant la revendication 17, caractérisé en ce que le système de détection et de signalisation de fuite comporte une installation de mesure qui d'une part crée, entre la paroi intérieure (6) et la paroi dure (2), une dépression d'une valeur de consigne préréglée et d'autre part mesure la pression réelle entre ces deux parois (6, 2), et émet un signal lorsque la pression réelle entre ces parois (6, 2) et la valeur de consigne présentent systématiquement une discordance.

19. Paroi intérieure (6) pour un réservoir de stockage à paroi dure (2) approprié pour le stockage de combustibles liquides, et en particulier pour le stockage d'essence, caractérisée en ce que cette paroi intérieure (6) est constituée du sac souple décrit dans l'une quelconque des revendications 1 à 15.

20. Sac souple à utiliser comme paroi intérieure souple (6) dans un réservoir de stockage à paroi dure (2) approprié pour le stockage de combustibles liquides, et en particulier d'essence, correspondant au sac souple suivant l'une quelconque des revendications 1 à 15.
